# NEW EUROPEAN PATENT SPECIFICATION

(11) **EP 0 230 695 B2**
(45) Date of publication and mention of the opposition decision: **29.03.1995**
(45) Mention of the grant of the patent: 04.12.1991
(21) Application number: 86202331.4
(22) Date of filing: 18.12.1986
(51) Int. Cl.: G11B 23/00, G11B 17/028

(54) **Disc-shaped information carrier having an insert piece provided with a central bore**
Plattenförmiger Informationsträger mit einem Einsatzstück das ein zentrales Loch besitzt
Support d'information en forme de disque comportant une pièce d'insertion munie d'un trou central

(30) Priority: 24.12.1985 NL 8503563
(43) Date of publication of application: 05.08.1987
(73) Proprietor: GPT Axxicon B.V., NL-5706 LD Helmond (NL)
(72) Inventor: Van Poorten, Antonius, NL-5752 BG Deurne (NB) (NL)
(74) Representative: Schumann, Bernard Herman Johan

(56) References cited:
- EP-A- 0 085 983
- EP-A- 0 097 363
- EP-A- 0 101 011
- EP-A- 0 142 637
- WO-A-84/04839
- DE-A- 3 325 434
- DE-A- 3 407 367
- DE-A- 3 441 521
- FR-A- 725 759
- FR-A- 2 508 220
- GB-A- 840 783
- US-A- 2 806 704
- US-A- 3 729 720
- US-A- 4 149 207
- US-A- 4 159 494
- US-A- 4 318 223
- US-A- 4 409 629
- US-A- 4 562 505
- PATENT ABSTRACTS OF JAPAN, vol. 7, no. 67 (P-184)[1212], 19th March 1983 & JP-A-57-210 487

## Description

The invention relates to a round disc-shaped information carrier having a bore at the center of it, in combination with an insert piece comprising a generally cylindrical part extending through the bore and substantially contacting the entire inside edge of the bore, the combination being adapted to be rotated, in a recording and/or reproducing apparatus by drive means having a spindle on which the information carrier is clamped, said spindle snugly fitting in in a bore present in the insert piece.

WO 84/04839 and DE-A-3 441 521 both relate to a combination of a round disc-shaped information carrier in combination with an insert piece as defined herein above.

It is noted that US-A-2 806 704 discloses a gramophone record provided with an insert piece so as to make the combination of record and insert piece suitable for being clamped on a gramophone turntable. The insert piece snap-fits into the central hole of the record and is to that end provided with slots. These slots, however, extend from the outer peripheral wall of the insert piece in a radially inward direction.

During the manufacture by means of press moulding techniques of such an information carrier a central bore is punched out, prior to the removal from a press mould of the ready and cooled product by means of a punching operation. With such an operation it can not always be avoided to a sufficient degree that the final product exhibits a bore of which the quality and the accuracy leaves to be desired. Caused by the punching out of the bore in the thermal plastic material in its still warm, and therefore readily deformable condition, the edge of the bore is pressed away a little to one side, owing to which this edge exhibits an undesirable sharpness or even a somewhat rough structure.

In order to solve this problem the invention provides an information carrier of the type described, which is characterised in that said information carrier is made of a stiff material by injection moulding and in that the insert piece consists of an axially slotted hollow cylindrical body having at one end a closed flange and at its other end a radially outwardly extending peripheral rib segmented by the axial slots, said axial slots extending partially into the flange from its inside edge in an outward direction and the rib segments forming together with the flange a gripping channel such that the insert piece snap-fits into the information carrier.

The invention also allows press moulding by means of other techniques, e.g. using a ring of small injection openings around a bore. This technique is known as "refuse-free moulding". The fact that this technique is not applied for most information carriers is caused by the fact that the injection points can not or only with a lot of effort be removed in an after-treatment. Now, according to the invention, the insert piece can cover the injection points, so that one can use the refuse-less injection method. It will be clear that such a method has the advantage of using less material.

E.g. for information carriers usable from both sides the insert piece may have a symmetrical construction. In this case one may think of an embodiment exhibiting the special feature that the insert piece comprises two parts, the one of which is brought through the bore present in the information carrier from the one side and the other of which from the other side.

If both parts are identical, one has only have to use one press mould for the insert piece.

The invention will now be explained with reference to the drawing of two arbitrary embodiments to which the invention is not limited. In the drawing:
Fig. 1 shows an information carrier having an insert piece and a capstan provided with support means therefore; and
Fig. 2 shows an information carrier provided with an alternative embodiment of an insert piece consisting of two identical parts.

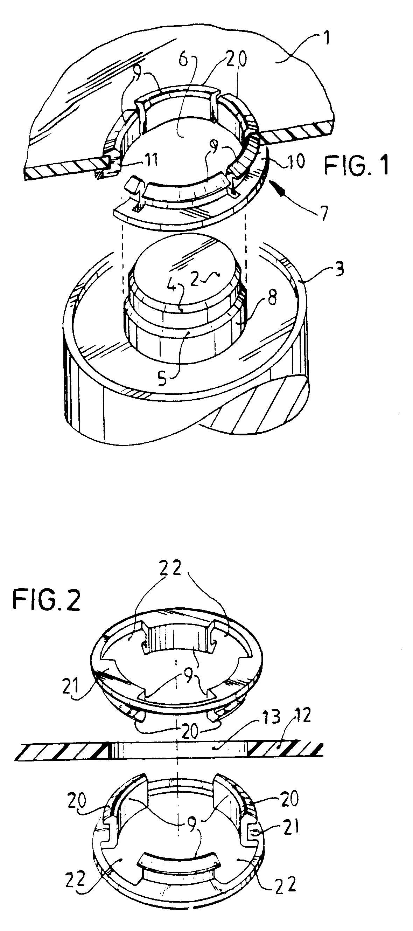

Fig. 1 shows an information carrier 1, e.g. a compact-disc, that can be carried and during operation rotatably driven by means of a central driving spindle 2, and a support edge 3 coupled therewith. The driving spindle 2 exhibits a stepwise structure having two conically tapering circumferential surfaces 4, 5, for searching and centering the information carrier 1.

The information carrier 1 is provided with a central bore 6, in which an insert piece 7 is positioned. This insert piece 7 is provided with a central bore 8, the diameter of which corresponds exactly with the diameter of the lower part 8 of spindle 2.

The insert piece 7 exhibits a ring of six resilient locking edges 9, by means of which the insert piece 7 can be pressed into the bore 6 of the information carrier 1, whilst pressing inwardly the locking edges 9, which after having passed the bore in outward direction to form a strong coupling between the insert piece 7 and the information carrier 1 together with a flange edge 10 positioned at the other side. Locking edges 9 are provided with conical searching edges 20 at their edge zones of their upper surfaces extending in outward direction.

With reference to the above description it will be clear that the central bore 8 was, up to now, the diameter of the central bore in information carrier 1. With the invention the information carrier 1 has to be provided with a bore having a larger diameter in connection with the thickness at both sides of the generally cylinder-shaped vertical wall part 11 of the insert piece 7.

Fig. 2 shows an insert piece consisting of two identical parts 21 and provided with the same locking edges as shown in fig. 1, in which, however, each part 21 is provided with only three equidistant locking edges 9, leaving free intermediate zones 22 which extend over a somewhat larger angle than the locking edges 9 in such a way, that a locking edge of the one part 21 fits in the free zone of the other element. Thus in a first step the one part 21 can lockingly be coupled with the information carrier 12 according to fig. 1 and in a next-following step the other part 21 can be coupled with that information carrier 12.

## Claims

1. Round disc-shaped information carrier (1) having a bore (6) at the center of it, in combination with an insert piece (7) comprising a generally cylindrical part extending through the bore (6) and substantially contacting the entire inside edge of the bore (6), the combination (1, 7) being adapted to be rotated, in a recording and/or reproducing apparatus by drive means having a spindle (2) on which the information carrier (1) is clamped, said spindle (2) snugly fitting in in a bore present in the insert piece (7),
characterized in that
said information carrier (1) is made of a stiff material by injection moulding and in that the insert piece (7) consists of an axially slotted hollow cylindrical body having at one end a closed flange (10) and at its other end a radially outwardly extending peripheral rib (9) segmented by the axial slots, said axial slots extending partially into the flange (10) from its inside edge in an outward direction and the rib segments (9) forming together with the flange (10) a gripping channel such that the insert piece (7) snap-fits into the information carrier (1).

2. Information carrier according to claim 1,
characterized in that the insert piece (7) comprises two parts (14,14), the one of which is brought through the bore (6) present in the information carrier (1) from the one side and the other of which from the other side.

3. Information carrier according to claim 2,
characterized in that both pieces (21,21) are identical.

4. Insert piece as part of the combination as defined in any one of the preceding claims.

## Patentansprüche

1. Runder plattenförmiger Informationsträger (1) mit einer Mittelöffnung (6), in Kombination mit einem Einsatzstück, das einen allgemein zylindrischen Abschnitt aufweist, der sich durch die Bohrung (6) erstreckt und im wesentlichen mit der gesamten Innenkante der Bohrung (6) in Berührung steht, wobei die Kombination (1, 7) in einem Aufzeichnungs- und/oder Wiedergabegerät mit Hilfe von Antriebseinrichtungen in Drehung versetzbar ist, die eine Spindel (2) aufweisen, auf die der Informationsträger (1) aufgeklemmt wird, wobei die Spindel (2) mit engem Sitz in eine Bohrung in dem Einsatzstück (7) paßt,
dadurch **gekennzeichnet**, daß der Informationsträger (1) durch Spritzgußformung aus einem steifen Material hergestellt ist und daß das Einsatzstück (7) aus einem in Axialrichtung geschlitzten hohlzylindrischen Körper besteht, der an einem Ende einen geschlossenen Flansch (10) und an seinem anderen Ende eine sich in Radialrichtung nach außen erstreckende Umfangsrippe (9) aufweist, die durch die axialen Schlitze in Segmente unterteilt ist, wobei sich die axialen Schlitze teilweise in den Flansch von dessen Innenrand in einer nach außen gerichteten Richtung erstrecken und die Rippensegmente (9) zusammen mit dem Flansch (10) einen Greiferkanal derart bilden, daß das Einsatzstück (7) in den Informationsträger einrastbar ist.

2. Informationsträger nach Anspruch 1,
dadurch **gekennzeichnet**, daß das Einsatzstück (7) zwei Teile (14, 14) umfaßt, von denen einer durch die in dem Informationsträger (1) vorhandene Öffnung (6) von einer Seite aus eingebracht wird, während der andere Teil von der anderen Seite eingebracht wird.

3. Informationsträger nach Anspruch 2,
dadurch **gekennzeichnet**, daß beide Teile (21, 21) identisch sind.

4. Einsatzstück als Teil der Kombination gemäß einem der vorhergehenden Ansprüche.

## Revendications

1. Support d'information (1) en forme de disque, comportant un trou (6) en son centre, en combinaison avec une pièce d'insertion (7) comprenant une partie généralement cylindrique, s'étendant à travers le trou (6), et placée pratiquement en contact avec la totalité du bord intérieur du trou (6), la combinaison (1, 7) étant adaptée pour tourner, dans un dispositif d'enregistrement et/ou de reproduction, grâce à un moyen d'entraînement muni d'une broche (2), sur laquelle le support d'information (1) est fixé, ladite broche (2) étant montée engagée dans un trou présent dans la pièce d'insertion (7), caractérisé en ce que ledit support d'information (1) est constitué d'un matériau rigide et obtenu par moulage par injection et en ce que la pièce d'insertion (7) est constituée d'un corps cylindrique creux fendu axialement ayant à une extrémité une bride fermée (10) et, à son autre extrémité, une nervure périphérique (9) s'étendant radialement vers l'extérieur, qui est segmentée par lesdites fentes axiales, lesdites fentes axiales s'étendant partiellement dans la bride (10), en partant de son bord intérieur, dans une direction orientée vers l'extérieur, et les segments (9) de la nervure formant avec la bride (10) une rainure de prise de telle manière que la pièce d'insertion (7) s'encliquette dans le support d'information (1).

2. Support d'information selon la revendication 1, caractérisé en ce que la pièce d'insertion (7) comprend deux parties (14, 14) dont l'une est passée depuis un côté à travers le trou (6) présent dans le support d'information (1) et l'autre est passée depuis l'autre côté.

3. Support d'information selon la revendication 2, caractérisé en ce que les deux pièces (21, 21) sont identiques.

4. Pièce d'insertion, faisant partie de la combinaison définie dans l'une quelconque des revendications précédentes.
